# EUROPÄISCHE PATENTSCHRIFT

(11) **EP 2 920 435 B1**
(45) Veröffentlichungstag und Bekanntmachung des Hinweises auf die Patenterteilung: **14.09.2016**
(21) Anmeldenummer: 13783579.9
(22) Anmeldetag: 29.10.2013
(51) Int. Cl.: F01L 1/344

(54) **NOCKENWELLE**
CAMSHAFT
ARBRE À CAMES

(30) Priorität: 13.11.2012 DE 102012220652
(43) Veröffentlichungstag der Anmeldung: 23.09.2015
(73) Patentinhaber: Mahle International GmbH, 70376 Stuttgart (DE)
(72) Erfinder: UNRATH, Christoph, 73660 Urbach (DE)
(74) Vertreter: BRP Renaud & Partner mbB Rechtsanwälte Patentanwälte Steuerberater
(86) Internationale Anmeldenummer: PCT/EP2013/072546
(87) Internationale Veröffentlichungsnummer: WO 2014/075908

(56) Entgegenhaltungen:
- EP-A1- 2 500 532
- WO-A1-2006/081789
- WO-A1-2009/005999
- DE-A1-102005 014 680
- JP-A- H07 224 617
- US-A1- 2005 235 939

## Beschreibung

Die vorliegende Erfindung betrifft eine Nockenwelle mit einer rohrartigen Außenwelle und einer koaxial dazu angeordneten und zur Außenwelle zumindest begrenzt verdrehbaren Innenwelle gemäß dem Oberbegriff des Anspruchs 1.

Aus der EP 1 963 625 B1 ist eine gattungsgemäße Nockenwelle mit einer Außenwelle und einer koaxial dazu angeordneten Innenwelle bekannt, wobei die Innenwelle über zumindest eine an einem axialen Endbereich der Welle angeordnete Sicherungseinrichtung direkt gegen eine stufenlose Innenmantelfläche der Außenwelle abgestützt ist.

Aufgrund der erforderlichen Freigängigkeit zwischen der Innenwelle und der Außenwelle bei einer verstellbaren Nockenwelle bzw. auch aufgrund einer erforderlichen Öldurchleitung für einen Phasensteller bzw. eine Lagerschmierung, wird üblicherweise ein ausreichender Ringspalt zwischen der Innenwelle und der Außenwelle zwischen 0,2 bis 2 mm radialer Höhe benötigt. Eine Abdichtung am Ende der beiden Wellen ist dabei erforderlich, um den für den Phasensteller erforderlichen Öldruck zwischen der Innenwelle und der Außenwelle aufbauen zu können. Bei aus dem Stand der Technik bekannten Innenwellen sind diese im Bereich eines Dichtringes aufgedickt, was beispielsweise durch einen Materialabtrag auf fast der kompletten Länge der Innenwelle benachbart zur Ringdichtung erreicht werden kann. Dies ist jedoch einerseits sehr teuer und erfordert andererseits eine zunächst unbearbeitete Innenwelle mit vergleichsweise viel Material.

Die vorliegende Erfindung beschäftigt sich daher mit dem Problem, für eine Nockenwelle der gattungsgemäßen Art eine verbesserte Ausführungsform anzugeben, die sich insbesondere durch eine andere Lagerung einer Innenwelle in Bezug auf eine Außenwelle auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer an sich bekannten Nockenwelle mit einer rohrartigen Außenwelle und einer koaxial dazu angeordneten und zur Außenwelle zumindest begrenzt verdrehbaren Innenwelle, an der Außenwelle zumindest eine radial nach innen ragende Ringstufe vorzusehen, über welche die Innenwelle an der Außenwelle gelagert werden kann. Die Innenwelle hingegen weist einen konstanten Außendurchmesser auf und bedarf daher keiner weiteren Nachbearbeitung, beispielsweise nach dem Ziehen derselben. Der minimale Durchmesser der Innenwelle wird somit lediglich durch die geforderte Torsionsfestigkeit sowie die Verstiftung von mit der Innenwelle gekoppelten Nocken (Stiftdurchmesser) beschränkt. Von besonderem Vorteil bei der erfindungsgemäßen Nockenwelle ist zudem, dass nicht wie bisher üblich die Innenwelle an einem Großteil ihrer Außenumfangsfläche nachbearbeitet, insbesondere gedreht werden muss, wodurch die Innenwelle vergleichsweise einfach und kostengünstig herzustellen ist. Die Außenwelle ist lediglich im Bereich der Lagerstelle bzw. im Bereich der Dichtstelle partiell aufgedickt durch die radial nach innen ragende Ringstufe, wobei der Aufwand zur Herstellung dieser radialen Ringstufe bei der Herstellung der Außenwelle sehr gering ist. Die Ringstufe kann beispielsweise durch einen Umformprozess, insbesondere durch Stauchen oder während des Ziehens der Außenwelle durch Zugdruckumformen, hergestellt werden. Je nach radialer Dicke der erfindungsgemäßen Ringstufe ist diese sogar in der Lage, einen Dichtring aufzunehmen bzw. zu lagern.

Bei einer weiteren vorteilhaften Ausführungsform der erfindungsgemäßen Lösung weist die Innenwelle eine nach außen offene Nut, insbesondere eine Umfangsnut, auf, in der ein Dichtring angeordnet ist, der bei montierter Nockenwelle auf axialer Höhe der Ringstufe angeordnet ist. Zusätzlich oder alternativ zu dem im Bereich der Ringstufe der Außenwelle angeordneten Dichtring kann somit ein Dichtring in einer nach außen offenen Nut der Innenwelle angeordnet werden, insbesondere sofern die Innenwelle als Vollprofil ausgebildet ist. Bei einer Ausbildung der Innenwelle als Rohr wird der Dichtring vorzugsweise in der nach innen offenen Nut der Außenwelle angeordnet. Die radial nach innen ragende Ringstufe kann dabei längsendseitig der Außenwelle angeordnet sein, rein theoretisch aber auch an mehreren axial zueinander beabstandeten Positionen der Außenwelle.

Bei einer vorteilhaften Weiterbildung der erfindungsgemäßen Lösung weist die wenigstens eine Ringstufe gefaste Kanten auf. Derartige gefaste Kanten erleichtern ein Einschieben der Innenwelle und damit die Montage der Nockenwelle. Zusätzlich oder alternativ weist die Innenwelle an zumindest einem Ende eine Einfahrschräge auf, die ebenso ein Einschieben der Innenwelle in die Außenwelle bei der Montage der Nockenwelle erleichtert.

Zweckmäßig besitzt der Ringspalt eine radiale Dicke von 0,2 bis 2,0 mm. Um ein genügendes Ölvolumen im Ringspalt vorhalten zu können, beispielsweise zur Schmierung von Gleitlagern bzw. zur Betätigung eines Fasenstellers, ist zwischen der Innenwelle und der Außenwelle der beschriebene Ringspalt vorgesehen. Der Ringspalt dient dabei insbesondere als Ölführung.

Generell kann die erfindungsgemäße Nockenwelle vergleichsweise einfach montiert werden. Hierzu wird beispielsweise zunächst ein Dichtring in eine nach außen offene Nut der Innenwelle eingelegt, wobei anschließend eine Montagehülse über den Dichtring geschoben wird. Durch die Montagehülse wird der Dichtring in die innenwellenseitige Nut eingedrückt. Anschließend erfolgt ein Einschieben der Innenwelle in die Außenwelle und dadurch die Montage der Nockenwelle. Abschließend wird die Montagehülse abgezogen, wodurch der in die Nut der Innenwelle eingedrückte Dichtring sich gegen eine Innenmantelfläche der Außenwelle anlegt und dadurch den Ringspalt zwischen der Innenwelle und der Außenwelle in Axialrichtung abdichtet. Ist hingegen der Dichtring bei einer alternativen Ausführungsform in einer Nut der Außenwelle angeordnet, so wird zunächst der Dichtring in die nach innen offene Nut der Außenwelle eingelegt und anschließend die Innenwelle in die Außenwelle eingeschoben. Durch die Einfahrschräge an dem in Einschieberichtung vorderen Ende der Innenwelle kann eine Verletzung des Dichtrings beim Einschieben ausgeschlossen werden. Somit ist auch eine vergleichsweise einfache Montage der Nockenwelle bei der zuletzt genannten Ausführungsform möglich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erste mögliche Ausführungsform einer erfindungsgemäßen Nockenwelle,
- Fig. 2: eine Darstellung wie in Fig. 1, jedoch bei einem an einer Innenwelle gelagerten Dichtring,
- Fig. 3: eine Darstellung wie in Fig. 2, jedoch bei anders ausgebildeter radialer Ringstufe,
- Fig. 4: eine Schnittdarstellung durch eine erfindungsgemäße Nockenwelle mit endseitig angeordnetem Phasensteller,
- Fig. 5a-d: einzelne Verfahrensschritte zur Montage der erfindungsgemäßen Nockenwelle.

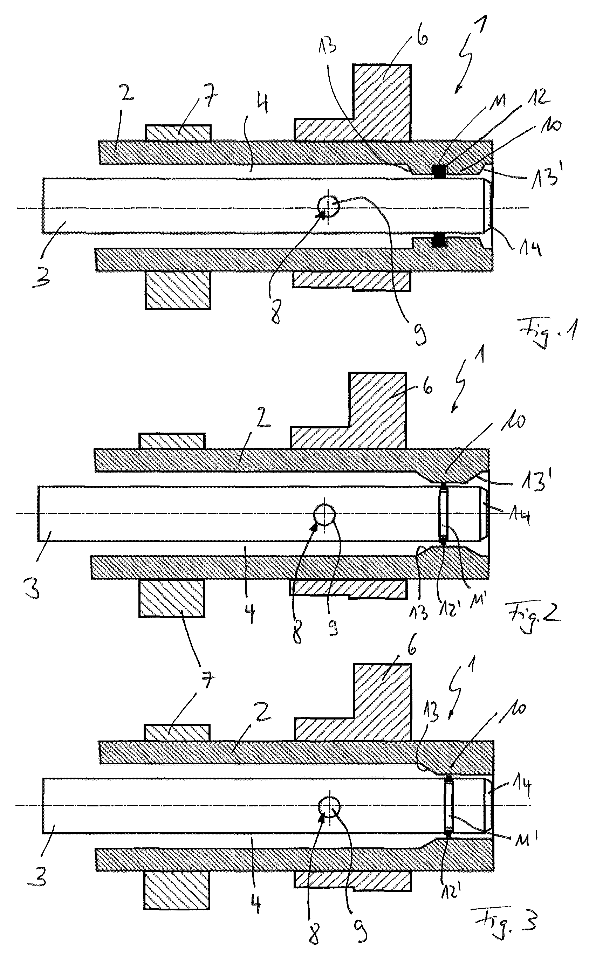

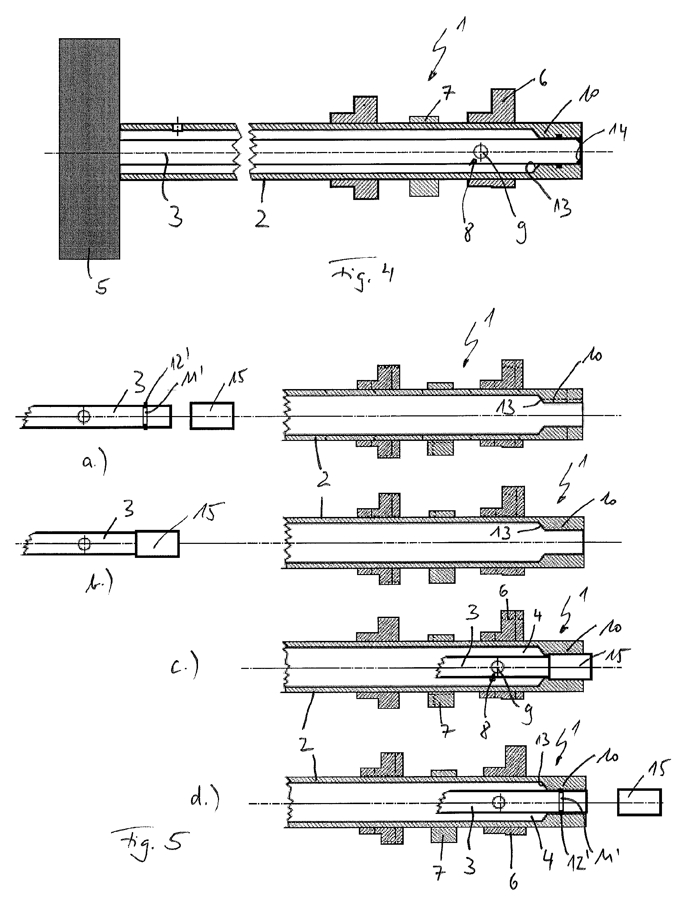

Entsprechend den Figuren 1 bis 4, weist eine erfindungsgemäße Nockenwelle 1 eine rohrartige Außenwelle 2 sowie eine koaxial dazu angeordnete und zur Außenwelle 2 zumindest begrenzt verdrehbare Innenwelle 3 auf. Zwischen der Innenwelle 3 und der Außenwelle 2 ist dabei zumindest bereichsweise ein Ringspalt 4 vorgesehen, zur Leitung von Öl für die Schmierung von Gleitlagern und/oder für die Betätigung eines Phasenstellers 5 (vergleiche Figur 4). Ein derartiger Phasensteller 5 wird in bekannter Weise zur Relativverdrehung der Innenwelle 3 zur Außenwelle 2 verwendet, wobei die Innenwelle 3 drehfest mit ersten Nocken 6 und die Außenwelle 2 drehfest mit zweiten Nocken 7 verbunden ist. Die drehfeste Verbindung zwischen der Innenwelle 3 und den ersten Nocken 6 erfolgt dabei über eine Verstiftung 8, die jeweils einen Stift 9 aufweist, der in die Innenwelle 3 eingesteckt und zugleich drehfest mit dem ersten Nocken 6 verbunden ist. In der Außenwelle 2 ist dabei auf axialer Höhe des Stiftes 9 ein sich in Umfangsrichtung erstreckendes Langloch vorgesehen, in welchem der Stift 9 bei einer Relativverdrehung der Innenwelle 3 zur Außenwelle 2 verstellt werden kann.

Um den Ringspalt 4 in Axialrichtung der Nockenwelle 1 abdichten zu können, weist die Außenwelle 2 erfindungsgemäß zumindest eine radial nach innen ragende Ringstufe 10 auf, über welche die Innenwelle 3 gegenüber der Außenwelle 2 gelagert bzw. abgedichtet ist. Die an einer Innenmantelfläche der Außenwelle 2 angeordnete Ringstufe 10 lässt sich vergleichsweise einfach und kostengünstig herstellen, beispielsweise durch einen Umformprozess, insbesondere durch ein Stauchen oder während des Ziehens der Außenwelle 2 durch ein Zugdruckumformen. Die Ringstufe 10 bietet dabei den großen Vorteil, dass die Innenwelle 3 mit konstantem Außendurchmesser ausgeführt werden kann und dadurch vergleichsweise kostengünstig herstellbar ist. Ebenso kann üblicherweise ein bisher aufwändiges und teures Nachbearbeiten der Innenwelle 3 entfallen.

Betrachtet man die Figuren 1 und 4, so kann man erkennen, dass die Außenwelle 2 im Bereich der Ringstufe 10 eine nach innen offene Ringnut 11 aufweist, in der ein Dichtring 12 angeordnet ist. Im Gegensatz dazu weist die Innenwelle 3 gemäß den Figuren 2, 3 und 5 eine nach außen offene Ringnut 11' auf, in der ein Dichtring 12' angeordnet ist, wobei der Dichtring 12' bei montierter Nockenwelle 1 auf axialer Höhe der Ringstufe 10 angeordnet ist. Bei dem Vorsehen der Nut 11 im Bereich der Ringstufe 10 ist keine Querschnittsschwächung der Innenwelle 3 erforderlich, so dass diese auf einem minimal erforderlichen Durchmesser beschränkt werden kann, der lediglich durch die erforderliche Torsionssteifigkeit und die Verstiftung 8 der ersten Nocken 6 (Durchmesser der Stifte 9) begrenzt ist. Der in der Außenwelle 2 gelagerte Dichtring 12 schafft dabei insbesondere auch Vorteile bei der Montage der Nockenwelle 1, wie dies im Folgenden noch erläutert wird. Da die Innenwelle 3 in diesem Fall insgesamt einen deutlich geringeren und lediglich durch die Torsionsfestigkeit und die Verstiftung 8 begrenzten Durchmesser aufweist, kann diese auch deutlich leichter ausgebildet werden, als bisher aus dem Stand der Technik bekannte Innenwellen. Die gezeichnete Innenwelle 3 ist dabei als Vollprofil ausgebildet, wobei selbstverständlich auch eine hohle Innenwelle 3 denkbar ist.

Der Dichtring 12, 12' kann aus einem Kunststoff, insbesondere aus einem Elastomer oder einem Polytetrafluorethylen (PTFE) ausgebildet sein, wobei selbstverständlich auch metallische Dichtringe denkbar sind. Der Dichtring 12, 12' ist dabei in der Lage, das chemische Milieu innerhalb der Nockenwelle 1 auch langfristig zu ertragen, ebenso wie die beim Betrieb einer die Nockenwelle 1 tragenden Brennkraftmaschine auftretenden Temperaturen. Die genannten Kunststoffe für den Dichtring 12, 12' sollen dabei lediglich rein exemplarisch verstanden werden, so dass auch weitere Kunststoffe denkbar sind.

Betrachtet man die Figuren 1 bis 5, so kann man erkennen, dass die wenigstens eine Ringstufe 10 zumindest eine gefaste Kante 13, je nach Ausführungsform sogar zwei gefaste Kanten 13, 13' aufweist, die ein Einschieben der Innenwelle 3 in die Außenwelle 2 erleichtern. In ähnlicher Weise kann an der Innenwelle 3 an zumindest einem Ende eine Einfahrschräge 14 vorgesehen sein, die ebenfalls das Einführen der Innenwelle 3 in die Außenwelle 2 und damit die Montage der Nockenwelle vereinfacht. Liegt die Ringstufe 10 am axialen Endbereich der Außenwelle 2, wie dies beispielsweise gemäß den Figuren 3 bis 5 dargestellt ist, so weist die Ringstufe 10 üblicherweise lediglich eine gefaste Kante 13 auf.

Gemäß den Figuren 5a bis 5d ist eine mögliche Montage der erfindungsgemäßen Nockenwelle 1 gezeigt, wobei zunächst im ersten Verfahrensschritt gemäß der Figur 5a eine Montagehülse 15 koaxial zur Innenwelle 3 ausgerichtet wird. Die Innenwelle 3 trägt in diesem Fall in ihrer Nut 11' den Dichtring 12'. Im gemäß der Figur 5b dargestellten Verfahrensschritt wird nun die Montagehülse 15 über den Dichtring 12' und damit über die Innenwelle 3 geschoben, woran anschließend im Verfahrensschritt gemäß der Figur 5c die Innenwelle 3 in die Außenwelle 2 der Nockenwelle 1 eingeschoben wird. Beim Überstülpen der Montagehilfe 15 über die Innenwelle 3 drückt die Montagehilfe 15 den Dichtring 12' in die innenwellenseitige Nut 11'. Ist die endgültige Lage der Innenwelle 3 in der Außenwelle 2 erreicht, wird die Montagehülse 15 gemäß dem Verfahrensschritt in Figur 5d abgezogen, woraufhin der Dichtring 12' sich zumindest teilweise aus der Nut 11' der Innenwelle 3 erhebt und gegen eine Innenmantelfläche der Außenwelle 2, das heißt konkret gegen die Innenmantelfläche der Ringstufe 10, anlegt.

Ist der Dichtring 12 hingegen in der Nut 11 der Außenwelle 2 angeordnet, so wird zur Montage der Nockenwelle 1 zunächst der Dichtring 12 in der Nut 11 positioniert, woraufhin anschließend die Innenwelle 3 in die Außenwelle 2 eingeschoben wird und des durchgehenden Außendurchmessers der Innenwelle 3 erfolgt auch beim Einschieben derselben in die Außenwelle 2 keine Verletzung des Dichtrings 12, so dass hier auf eine Montagehilfe 15 gänzlich verzichtet werden kann.

Mit der erfindungsgemäßen Nockenwelle 1 lässt sich somit nicht nur deren Montage vereinfachen, sondern zugleich auch das Gewicht derselben deutlich reduzieren, was insbesondere in Kraftfahrzeugen eingesetzten Brennkraftmaschinen von großem Vorteil ist. Zudem ist die radiale Ringstufe 10 vergleichsweise einfach und kostengünstig herstellbar, was im Vergleich zu einer bisher aufwändig über fast die gesamte axiale Länge nachbearbeitete Innenwelle einen deutlichen Vorteil darstellt.

## Patentansprüche

1. Nockenwelle (1) mit einer rohrartigen Außenwelle (2) und einer koaxial dazu angeordneten und zur Außenwelle (2) zumindest begrenzt verdrehbaren Innenwelle (3), wobei zwischen der Innenwelle (3) und der Außenwelle (2) zumindest bereichsweise ein Ringspalt (4) vorgesehen ist,
**dadurch gekennzeichnet,**
**dass** die Außenwelle (2) zumindest eine radial nach innen ragende Ringstufe (10) aufweist, über welche die Innenwelle (3) gegenüber der Außenwelle (2) gelagert/abgedichtet ist.

2. Nockenwelle nach Anspruch 1,
**dadurch gekennzeichnet,**
**dass** die Innenwelle (3) einen konstanten Außendurchmesser aufweist.

3. Nockenwelle nach Anspruch 1 oder 2,
**dadurch gekennzeichnet,**
**dass** die Außenwelle (2) im Bereich der Ringstufe (10) eine nach innen offene Nut (11) aufweist, in welcher ein Dichtring (12) angeordnet ist.

4. Nockenwelle nach einem der Ansprüche 1 bis 3,
**dadurch gekennzeichnet,**
**dass** die Innenwelle (3) eine nach außen offene Nut (11') aufweist, in welcher ein Dichtring (12') angeordnet ist, der bei montierter Nockenwelle auf axialer Höhe der Ringstufe (10) angeordnet ist.

5. Nockenwelle nach Anspruch 3 oder 4,
**dadurch gekennzeichnet,**
**dass** der Dichtring (12,12') aus einem Elastomer oder aus Polytetrafluoretylen (PTFE) ausgebildet ist.

6. Nockenwelle nach einem der vorhergehenden Ansprüche,
**dadurch gekennzeichnet,**
**dass** die wenigstens eine Ringstufe (10) durch Umformen, insbesondere durch Stauchen, der Außenwelle (2) hergestellt ist.

7. Nockenwelle nach einem der Ansprüche 1 bis 6,
**dadurch gekennzeichnet,**
**dass** die wenigstens eine Ringstufe (10) zumindest eine gefaste Kante (13,13') aufweist.

8. Nockenwelle nach einem der Ansprüche 1 bis 7,
**dadurch gekennzeichnet,**
**dass** die Innenwelle (3) an zumindest einem Ende eine Einfahrschräge (14) aufweist.

9. Nockenwelle nach einem der Ansprüche 1 bis 8,
**dadurch gekennzeichnet,**
**dass** der Ringspalt (4) eine radiale Dicke von 0,2 - 2 mm aufweist.

10. Nockenwelle nach einem der Ansprüche 1 bis 9,
**dadurch gekennzeichnet,**
**dass** die Innenwelle (3) drehfest mit ersten Nocken (6) und die Außenwelle (2) drehfest mit zweiten Nocken (7) verbunden sind.

## Claims

1. Camshaft (1) having a tubular outer shaft (2) and an inner shaft (3) which is arranged coaxially thereto and can be rotated at least to a limited extent with respect to the outer shaft (2), wherein an annular gap (4) is provided at least in some regions between the inner shaft (3) and the outer shaft (2), **characterised in that** the outer shaft (2) has at least one annular step (10), which projects radially inwards and by means of which the inner shaft (3) is mounted/sealed off from the outer shaft (2).

2. Camshaft according to claim 1, **characterised in that** the inner shaft (3) has a constant outer diameter.

3. Camshaft according to claim 1 or 2, **characterised in that** the outer shaft (2) comprises an inwardly-open groove (11) in the region of the annular step (10), in which a sealing ring (12) is arranged.

4. Camshaft according to one of claims 1 to 3, **characterised in that** the inner shaft (3) comprises an outwardly-open groove (11') in which a sealing ring (12') is arranged, which sealing ring (12') is arranged at the axial height of the annular step (10) when the camshaft is mounted.

5. Camshaft according to claim 3 or 4, **characterised in that** the sealing ring (12, 12') is formed from an elastomer or from polytetrafluoroetylene (PTFE).

6. Camshaft according to one of the preceding claims, **characterised in that** the at least one annular step (10) is produced by forging, in particular by swaging, of the outer shaft (2).

7. Camshaft according to one of claims 1 to 6, **characterised in that** the at least one annular step (10) comprises a bevelled edge (13, 13').

8. Camshaft according to one of claims 1 to 7, **characterised in that** the inner shaft (3) comprises a lead-in chamfer (14) on at least one end.

9. Camshaft according to one of claims 1 to 8, **characterised in that** the annular gap (4) has a radial thickness of 0.2 to 2 mm.

10. Camshaft according to one of claims 1 to 9, **characterised in that** the inner shaft (3) is connected rotationally fixed to the first cam (6) and the outer shaft (2) is connected rotationally fixed to the second cam (7).

## Revendications

1. Arbre à cames (1) comprenant un arbre extérieur (2) de type tubulaire et un arbre intérieur (3) disposé par rapport à ce dernier de manière coaxiale et pouvant tourner au moins de manière limitée par rapport à l'arbre extérieur (2), dans lequel une fente annulaire (4) est prévue au moins par endroits entre l'arbre intérieur (3) et l'arbre extérieur (2),
**caractérisé en ce**
**que** l'arbre extérieur (2) présente au moins un palier annulaire (10) dépassant de manière radiale vers l'intérieur, par l'intermédiaire duquel l'arbre intérieur (3) est monté/rendu étanche par rapport à l'arbre extérieur (2).

2. Arbre à cames selon la revendication 1,
**caractérisé en ce**
**que** l'arbre intérieur (3) présente un diamètre extérieur constant.

3. Arbre à cames selon la revendication 1 ou 2,
**caractérisé en ce**
**que** l'arbre extérieur (2) présente, dans la zone du palier annulaire (10), une rainure (11) ouverte vers l'intérieur, dans laquelle une bague d'étanchéité (12) est disposée.

4. Arbre à cames selon l'une quelconque des revendications 1 à 3,
**caractérisé en ce**
**que** l'arbre intérieur (3) présente une rainure (11') ouverte vers l'extérieur, dans laquelle est disposée une bague d'étanchéité (12'), qui est disposée sur une hauteur axiale du palier annulaire (10) lorsque l'arbre à cames est monté.

5. Arbre à cames selon la revendication 3 ou 4,
**caractérisé en ce**
**que** la bague d'étanchéité (12, 12') est réalisée à partir d'un élastomère ou à partir d'un polytétrafluoroéthylène (PTFE).

6. Arbre à cames selon l'une quelconque des revendications précédentes,
**caractérisé en ce**
**que** l'au moins un palier annulaire (10) est fabriqué par une mise en forme, en particulier par un refoulage, de l'arbre extérieur (2).

7. Arbre à cames selon l'une quelconque des revendications 1 à 6,
**caractérisé en ce**
**que** l'au moins un palier annulaire (10) présente au moins une arête (13, 13') chanfreinée.

8. Arbre à cames selon l'une quelconque des revendications 1 à 7,
**caractérisé en ce**
**que** l'arbre intérieur (3) présente, au niveau au moins d'une extrémité, un biseau d'insertion (14).

9. Arbre à cames selon l'une quelconque des revendications 1 à 8,
**caractérisé en ce**
**que** la fente annulaire (4) présente une épaisseur radiale de 0,2 à 2 mm.

10. Arbre à cames selon l'une quelconque des revendications 1 à 9,
**caractérisé en ce**
**que** l'arbre intérieur (3) est relié de manière solidaire en rotation aux premières cames (6), et en ce que l'arbre extérieur (2) est relié de manière solidaire en rotation aux deuxièmes cames (7).
